# FASCICULE DE BREVET EUROPEEN

(11) **EP 3 727 942 B1**
(45) Date de publication et mention de la délivrance du brevet: **30.03.2022**
(21) Numéro de dépôt: 18825670.5
(22) Date de dépôt: 18.12.2018
(51) Int. Cl.: B60R 16/02, B60R 19/48, H01Q 1/42

(54) **PIÈCE DE CARROSSERIE MOULÉE COMPORTANT DES ÉLÉMENTS DE CONNECTIQUE INTÉGRÉS, ET PROCÉDÉ DE FABRICATION ASSOCIÉ**
GEFORMTES KAROSSERIEBAUTEIL MIT INTEGRIERTEN VERBINDERELEMENTEN UND ZUGEHÖRIGES HERSTELLUNGSVERFAHREN
MOULDED BODYWORK COMPONENT COMPRISING INTEGRATED CONNECTOR ELEMENTS, AND ASSOCIATED MANUFACTURING METHOD

(30) Priorité: 21.12.2017 FR 1762774
(43) Date de publication de la demande: 28.10.2020
(73) Titulaire: Compagnie Plastic Omnium, 69007 Lyon (FR)
(72) Inventeur: TORRES, Olivier, 69230 SAINT-GENIS LAVAL (FR); BOISSON, Damien, 01360 BELIGNEUX (FR)
(74) Mandataire: LLR
(86) Numéro de dépôt international: PCT/EP2018/085580
(87) Numéro de publication internationale: WO 2019/121740

(56) Documents cités:
- WO-A1-01/42051
- DE-A1- 19 931 189
- DE-A1-102004 021 630
- DE-A1-102010 034 073
- DE-A1-102013 006 056
- JP-A- 2016 120 867
- JP-A- 2016 185 758

## Description

L'invention concerne le domaine de la fabrication des pièces de carrosserie de véhicule automobile par injection d'un matériau thermoplastique. Ces pièces forment une peau extérieure participant à la forme et à l'esthétique du véhicule, elles participent largement à l'allégement des véhicules. Aussi, de nombreux véhicules modernes sont équipés d'un hayon arrière ou d'un flanc de portière, ou encore de pare-chocs avant ou arrière réalisés par injection.

Au-delà du soin apporté à l'aspect visuel de ces pièces, et en raison même de leur exposition à l'extérieur du véhicule, on observe un besoin croissant de placer des capteurs de toute sorte pour disposer d'informations particulières sur l'état du véhicule.

A titre d'exemple, les pare-chocs de véhicules doivent désormais intégrer un radar de proximité permettant d"assister le conducteur dans ses manœuvres de stationnement ou encore des caméras aptes à renvoyer une image de la position du véhicule par rapport à son environnement proche ou aux véhicules qui l'entourent.

Ces pièces de carrosserie comportent alors des moyens permettant de supporter ces capteurs ainsi que des chemins de câbles pour relier ces capteurs aux sources d'alimentation électrique et aux organes de commande centralisés. Les capteurs et les chemins de câbles sont fixés par des dispositifs de clipsage autorisant le démontage du capteur en cas de choc. Les pattes de clipsage, sont en règle générale rapportées par soudure sur la pièce de carrosserie.

La soudure des pattes de clipsage, l'installation des chemins de câbles, le clipsage des capteurs et le raccordement des connecteurs aux capteurs, sont des opérations peu susceptibles de faire usage de moyens automatisés, et requièrent un temps de travail non négligeable nécessitant l'intervention d'un opérateur qualifié. Le document WO 01/42051 A1 décrit une pièce de carrosserie de véhicule automobile conforme au préambule de la revendication 1.

L'invention a pour objet d'apporter une solution originale permettant de réduire considérablement les coûts liés aux pratiques décrites ci-dessus.

L'invention concerne une pièce de carrosserie de véhicule automobile selon la revendication 1.

La nappe de connexion électrique et les plaques de connexion sont surmoulées dans le matériau thermoplastique formant la pièce de carrosserie.

La nappe de connexion électrique, formée d'un film souple de faible épaisseur sur lequel sont déposées des pistes conductrices de l'électricité, se substitue aux câbles reliant les capteurs à un boitier centralisé du véhicule

Les plaques de connexion, pouvant du reste comporter des dispositifs de fixation par clipsage, font office simultanément de support et de moyen de connexion au capteur.

Lors de l'assemblage final, il n'y a plus nécessité de souder les pattes des moyens de clipsage et d'implanter le chemin de câble. Les capteurs peuvent être fixés et embrochés directement sur les plaques de connexion sur les emplacements qui leurs sont réservés sans qu'il soit nécessaire de brancher de connecteur par une action supplémentaire.

Au-delà des gains substantiels réalisés au stade de l'assemblage final, il en résulte une pièce de carrosserie comportant des capteurs d'une plus grande fiabilité en raison de la réduction du nombre de points d'entrée des agents corrosifs susceptibles de nuire à la qualité des liaisons électriques. De plus, les pistes conductrices de l'électricité sont intégrées dans la matière formant la peau et sont moins exposées aux frottements ou aux arrachements souvent observés à l'issue des opérations de maintenance.

De même, la nécessité de souder les pattes des moyens de clipsage ne s'imposant plus il est également possible de réduire localement les épaisseurs de la peau et de gagner quelques centaines de grammes sur le poids de la pièce.

Enfin, en raison de la souplesse de la nappe de connexion, il est possible de suivre des passages présentant des courbures plus prononcées et plus complexes que les passages empruntés par les chemins de câbles. Cet avantage autorise la localisation des capteurs dans des emplacements difficilement accessibles jusque-là avec des câbles.

L'invention concerne également un procédé de fabrication selon la revendication 8, permettant d'obtenir la pièce de carrosserie décrite ci-dessus et au cours duquel on exécute les étapes suivantes :
- Etape A : on dépose une nappe de connexion souple comportant sur une de ses faces des pistes conductrices de l'électricité sur la surface d'une partie mobile d'un moule, de sorte que la face de la nappe de connexion opposée à la face supportant les pistes conductrices de l'électricité est en contact avec la surface du moule et que les pistes conductrices sont placées au droit de matrices creuses réalisées dans la partie mobile du moule,
- Etape B : on superpose sur la nappe de connexion une plaque de connexion comportant un ou plusieurs ergots dont la forme est adaptée pour pénétrer dans les matrices creuses, lesdits ergots étant placés au droit desdites matrices creuses et faisant face aux pistes conductrices de l'électricité,
- Etape C : on ferme le moule en rapprochant la partie mobile du moule d'une partie fixe du moule et on injecte le matériau thermoplastique de sorte que la pression régnant dans l'enceinte du moule a pour effet de faire pénétrer les ergots de la plaque de connexion dans les matrices creuses et de poinçonner lesdits ergots sur les pistes conductrices de la nappe de connexion,
à l'issue de l'étape C, on démoule la pièce de carrosserie (1) et on insère des capteurs (6) ou des connecteurs dans les broches (32) des plaques de connexion (3).

Le raccordement entre la plaque de connexion et la nappe de connexion s'effectue alors simplement au moment de l'opération de moulage de la pièce.

La pièce de carrosserie selon l'invention peut comprendre isolément, ou en combinaison, les caractéristiques suivantes :
- La pièce de carrosserie comprend une plaque de connexion principale reliée électriquement par l'intermédiaire de la nappe de connexion avec l'ensemble des plaques de connexion de la pièce de carrosserie.
- La nappe de connexion et les plaques de connexion sont disposées du côté de la paroi de la peau non visible de l'extérieur, de sorte que les pistes conductrices de l'électricité de la nappe de connexion sont intercalées entre la nappe de connexion et la matière formant la peau.
- La plaque de connexion comprend un moyen pour supporter ledit capteur.
- Un orifice est aménagé dans la plaque de connexion pour supporter ledit capteur.
- Un orifice est aménagé dans la paroi formant la peau extérieure pour permettre l'accès du capteur au côté de la paroi de la peau visible de l'extérieur.
- La pièce de carrosserie comprend un ou plusieurs capteurs connectés sur une ou plusieurs plaques de connexion.
- Le capteur est du type capteur de proximité, caméra de détection d'obstacle, caméra de détection du profil de la route, capteur/émetteur laser ou lidar, capteur de température, capteur de pression.

Le procédé selon l'invention peut aussi comprendre isolément, ou en combinaison, les caractéristiques suivantes :
- Préalablement à l'étape B, on dépose une colle ou un vernis conducteur de l'électricité sur la surface des ergots.
- On choisit les matériaux formant la nappe de connexion et la plaque de connexion parmi des matériaux compatibles avec le matériau thermoplastique formant la peau extérieure.
- Au cours de l'étape B, on introduit des broches de connexion s'étendant dans une direction sensiblement perpendiculaire à la surface de la plaque de connexion dans une cale formée d'un matériau élastique et insérée en force dans un orifice pratiqué dans la partie mobile du moule de sorte que, lorsque la cale élastique est complètement rentrée dans ledit orifice, les broches sont comprimées radialement au sein de la cale.

L'invention sera mieux comprise à la lecture des figures annexées, qui sont fournies à titre d'exemples et ne présentent aucun caractère limitatif, dans lesquelles :
- La figure 1 est une vue schématique d'un pare-chocs avant de véhicule selon l'invention.
- La figure 2 est une vue schématique en coupe de la pièce de carrosserie après démoulage.
- La figure 3 est une vue schématique en coupe de la pièce de carrosserie sur laquelle est monté un capteur.
- La figure 4 est une vue de face de la nappe de connexion et de la plaque de connexion.
- La figure 5 est une vue schématique de côté d'un moule d'injection ouvert après introduction de la nappe de connexion et de la plaque de connexion.
- La figure 6 est une vue schématique de côté du moule d'injection fermé.

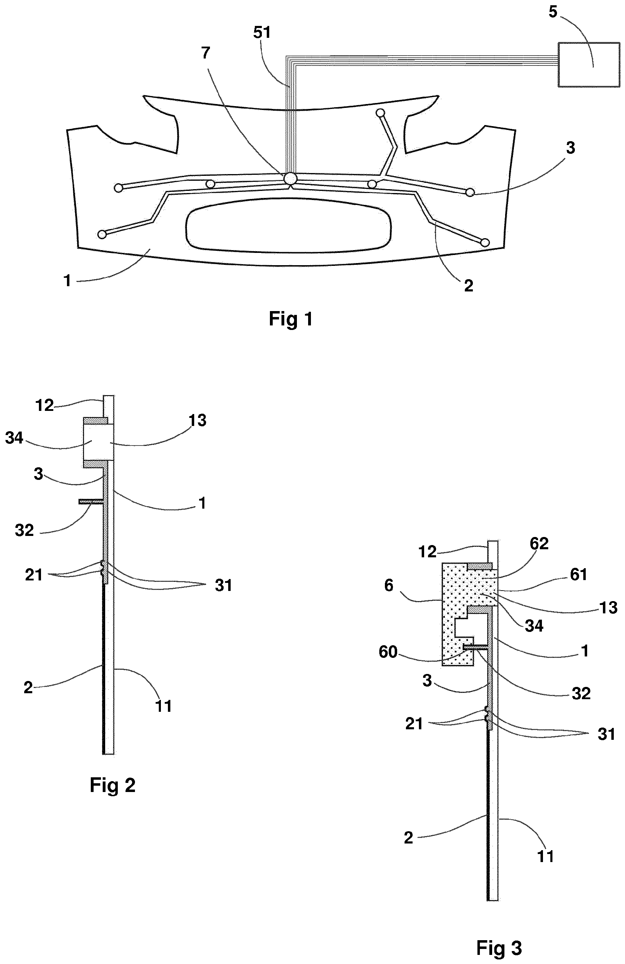

La figure 1 représente un pare-chocs 1 de véhicule automobile considéré dans la description qui suit comme une pièce de carrosserie formant une peau extérieure définissant la forme générale du véhicule.

La face intérieure 12 de la peau, non visible de l'extérieur, supporte une nappe de connexion 2 reliée à des plaques de connexion 3. Une plaque de connexion principale 7 est reliée électriquement, par l'intermédiaire de la nappe de connexion 2, à chacune des plaques de connexion 3. La plaque de connexion principale 7 est elle-même reliée par un faisceau de câbles 51 au boitier centralisé 5 du véhicule.

Les figures 2, 3 et 4 permettent de mieux visualiser l'objet de l'invention et les positionnements respectifs des différents composants.

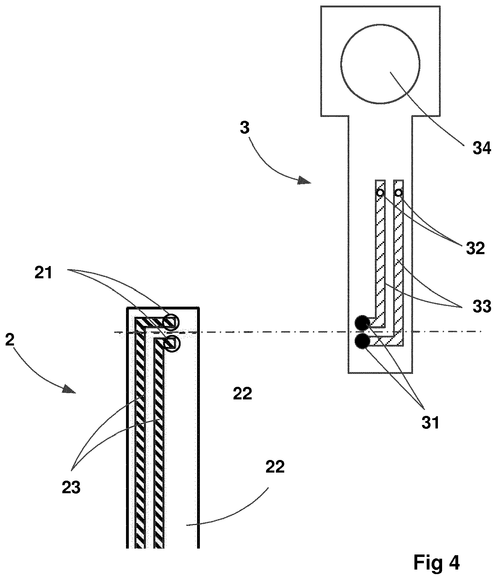

Préalablement, et en référence à la figure 4, la nappe de connexion 2 est préférentiellement réalisée à l'aide d'un film souple 22 de faible épaisseur sur laquelle ont été déposées des pistes conductrices de l'électricité 23. L'utilisation d'un film souple permet d'épouser facilement les formes généralement arrondies de la pièce de carrosserie et de s'affranchir, en les contournant facilement, de la position des ouvertures pratiquées dans la pièce.

On s'arrange toutefois pour que le film 22 ne soit pas trop mince de manière à former une barrière efficace aux agents agressifs susceptibles d'atteindre les pistes conductrices de l'électricité. Le matériau formant le film est choisi pour être compatible avec le matériau thermoplastique, tel que du polypropylène chargé de talc, formant la pièce de carrosserie.

Les pistes conductrices de l'électricité 23 sont formées à l'aide de procédés, connus en soi, tels que l'impression d'encres conductrices de l'électricité, l'évaporation de cuivre, ou encore par laminage de rubans de cuivre.

La plaque de connexion 3 comprend également des pistes conductrices de l'électricité 33 reliant des ergots 31 à des broches 32 s'étendant selon une direction sensiblement perpendiculaire au plan de la plaque de connexion 3. Un moyen de fixation, ici un orifice 34, est destiné à recevoir le corps 62 d'un capteur 6 dont la forme est adaptée pour s'insérer par encastrement dans ledit orifice 34.

Les capteurs, qui sont insérés lors d'une étape ultérieure d'assemblage, sont donc amovibles et peuvent facilement être remplacés lors d'une opération de maintenance ou en cas de choc nécessitant des réparations.

La forme du moyen de fixation du capteur sur la plaque de connexion n'est pas limitative et peut comprendre, comme cela a déjà été évoqué des moyens de fixation par clipsage, par emboitement, par collage ou encore par vissage.

La plaque de connexion 3 peut être réalisée en métal embouti ou en matière plastique moulée par injection d'un matériau compatible avec le matériau formant la peau 1.

Visible à la figure 2, la peau 1 supporte sur sa face arrière 12 le film de connexion qui est disposé de sorte que les pistes conductrices de l'électricité 23 soient intercalés entre le film 22 et la matière formant la face arrière 12 de la peau.

La plaque de connexion 3, également placée sur la face arrière 12 de la peau 1, est disposée de sorte que la partie de la plaque de connexion 3 comportant les ergots 31 viennent poinçonner les extrémités 21 des pistes conductrices de l'électricité de la nappe de connexion 2 de manière à assurer la continuité électrique entre les pistes 23 de la nappe de connexion 2 et les broches 32 de la plaque de connexion 3. Au niveau des ergots 31, la plaque de connexion 3 est donc interposée entre la matière formant la peau 1 et les pistes 23 de la nappe de connexion 2.

La matière formant la peau 1 est surmoulée sur la plaque de connexion 3 et la nappe de connexion 2 de sorte que la plaque de connexion et la nappe restent apparentes à la surface de la face intérieure 12 non visible de l'extérieur de la peau 1. Les pistes conductrices de l'électricité de la nappe de connexion 2 sont alors protégées des agressions externes par la matière formant la peau 1.

La figure 3 représente la vue en coupe de la pièce de carrosserie dans laquelle un capteur 6 est inséré dans l'orifice 34 de la pièce de connexion 2 et dans laquelle les broches 32 sont en continuité électrique avec la prise de connecteur 60 du capteur 6.

On observe également que la peau 1 comprend un orifice 13 disposé de sorte que la face avant 61 du capteur émerge du côté de la face 11 de la peau 1 visible de l'extérieur. Cet orifice 13 est particulièrement utile lorsque le capteur est par exemple une caméra.

L'invention concerne également un procédé d'injection adapté pour réaliser une pièce de carrosserie telle que décrite ci-dessus.

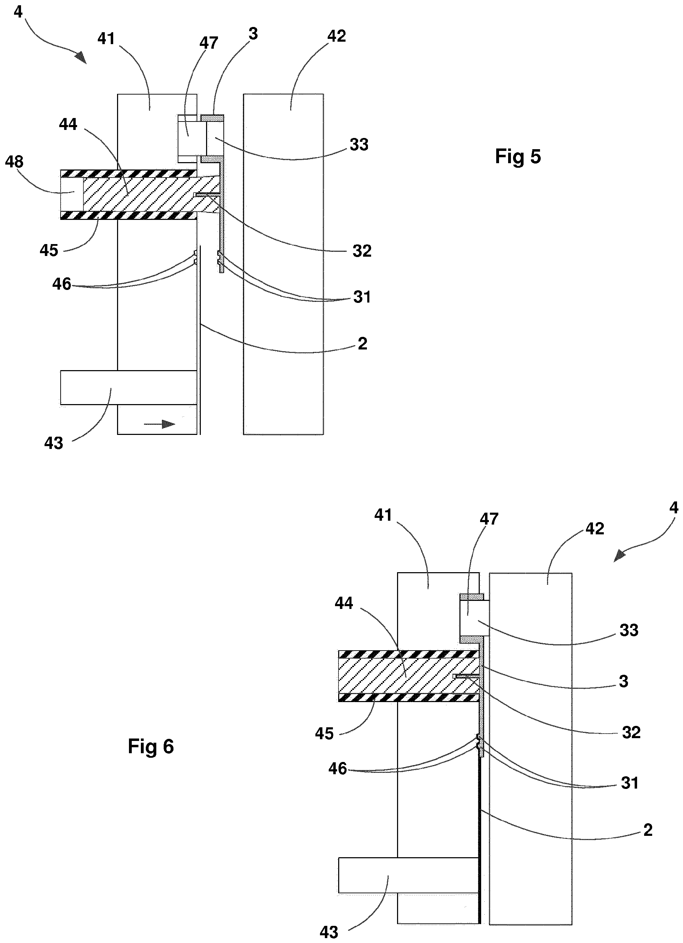

La figure 5 illustre une vue en coupe du moule 4 avant fermeture. Le moule 4 comprend une partie mobile 41 et une partie fixe 42. La partie mobile 41 du moule comporte des matrices 46 dont la forme est adaptée à la forme des ergots de connexion 31 de la plaque de connexion.

Au cours d'une **étape A,** on plaque la nappe de connexion 2 contre la paroi de la partie mobile 41 en veillant à ce que la face de la nappe opposée à la face supportant les pistes conductrices de l'électricité 23 soit en contact avec la surface de la partie mobile 41 du moule. On dispose également la nappe de connexion de sorte que les pistes conductrices de l'électricité 23 soient disposées au droit des matrices 46.

Au cours de **l'étape B** on introduit la plaque de connexion 3 contre la paroi de la partie mobile 41 en veillant à ce que les ergots 31 soient également disposés au droit des matrices 46. Au niveau des ergots 31, la nappe de connexion est alors intercalée entre la paroi de la partie mobile 41 et la plaque de connexion 3. Les ergots 31 font alors face aux pistes conductrices de l'électricité 23 de la nappe 2.

On observera ici que l'installation de la nappe de connexion 2 et de la plaque de connexion 3 dans le moule peut également se faire sur la partie fixe 42 du moule, en prenant la précaution de disposer judicieusement les orifices de sortie du matériau thermoplastique liquide dans le moule.

Au cours de **l'étape C,** on amène la partie mobile 41 contre la partie fixe 42 du moule et on ferme le moule. On procède alors à l'injection de la matière formant la peau de la pièce de carrosserie. La matière sous forme liquide est injectée sous pression.

La pression régnant dans l'enceinte du moule est alors suffisante pour appliquer fortement la plaque de connexion 3 sur la paroi de la partie mobile 43 et pour faire pénétrer les ergots 31 de la plaque de connexion 3 dans les matrices 46 de sorte que les ergots 31 poinçonnent la nappe de connexion 2 et établissent un contact électrique et mécanique, au niveau des points de contact 21, avec les pistes conductrices de l'électricité 23 de la nappe de connexion 2.

On observera ici que la forme des ergots et des bossages est ajustée pour que cette opération de pénétration en force soit efficace.

Pour améliorer la continuité électrique entre les pistes 23 de la nappe de connexion 2 et les ergots 31 de la plaque de connexion 3 il est possible de déposer une colle ou un vernis conducteur de l'électricité sur les ergots ou sur les points de contact 21 des pistes avant de lancer l'étape B du procédé tel que décrit ci-dessus.

Cette forme simple de réalisation de la connexion électrique entre la plaque de connexion 3 et la nappe de connexion 2 donne des résultats très satisfaisant mais peut aussi connaitre des alternatives telles que la réalisation de boutonnières au niveau de la nappe dans lesquelles les ergots, à l'image des boutons pressions, sont insérés en force.

A l'issue de l'étape C la pièce de carrosserie 1 est retirée du moule en activant les éjecteurs 43.

Pour éviter que la matière liquide se dépose sur les broches 32 de la plaque de connexion 3, préalablement à l'étape B ou au cours de cette étape, on insère lesdites broches dans une cale 44 formée d'un matériau élastique pénétrant en force dans un orifice 48 pratiqué dans la partie mobile 41 du moule. Pour éviter l'usure prématurée du moule la cale élastique 44 circule dans une bague 45 formée d'un matériau résistant et susceptible d'être changée au cours d'une opération de maintenance. Une fois la cale élastique 44 mise en place, comme cela est illustré à la figure 6, la pression radiale exercée sur la cale élastique comprime les broches 32 de la plaque de connexion 3 et interdit la pénétration de la matière liquide en cours de moulage et destinée à former la peau dans les logements dans lesquels sont insérées les broches 32.

Le moule comporte également un bossage 47 disposé, dans le cas d'espèce, sur la partie mobile du moule pour former dans la peau 1 l'orifice 13 permettant le passage du capteur 6.

Lors d'une étape de fabrication ultérieure, la pièce de carrosserie peut alors recevoir les capteurs 6 par une simple opération au cours de laquelle le corps 62 est inséré dans l'orifices 34, et les broches 32 sont enfichées dans les prises 60, et sans qu'il soit nécessaire d'implanter un faisceau de fil de raccordement.

On observe ici que la plaque de connexion principale 7 est prévue pour recevoir, au moment de l'assemblage de la pièce de carrosserie sur le véhicule un connecteur, en lieu et place d'un capteur, reliant les capteurs 6 disposés sur la pièce de carrosserie au boitier centralisé 5 du véhicule par l'intermédiaire du faisceau 51.

### NOMENCLATURE

- 1: Pièce d'aspect moulée par injection/peau.
- 11: Face de la peau visible de l'extérieur.
- 12: Face de la peau non visible de l'extérieur.
- 13: Orifice de la peau situé au droit du capteur.
- 2: Nappe de connexion.
- 21: Points de contact de la nappe de connexion avec les ergots de la plaque de connexion.
- 22: Film souple.
- 23: Piste conductrice de l'électricité de la nappe de connexion.
- 3: Plaque de connexion.
- 31: Ergots de connexion.
- 32: Broche de connexion électrique.
- 33: Piste conductrice de l'électricité de la plaque de connexion.
- 34: Orifice de passage et de fixation du capteur.
- 4: Moule.
- 41: Partie mobile du moule.
- 42: Partie fixe du moule.
- 43: Ejecteur.
- 44: Cale élastique.
- 45: Bague.
- 46: Matrice.
- 47: Bossage.
- 48: Orifice dans le moule destiné à recevoir la cale élastique.
- 5: Boitier centralisé.
- 51: Faisceau de câbles.
- 6: Capteur/connecteur.
- 60: Prise de connecteur.
- 61: Face avant du capteur.
- 62: Corps du capteur.
- 7: Plaque de connexion principale.

## Revendications

1. Pièce de carrosserie (1) de véhicule automobile formant une peau extérieure et réalisée par injection d'un matériau thermoplastique comprenant :
- une nappe de connexion (2) supportant sur une de ses faces des pistes conductrices de l'électricité (23) et,
- une ou plusieurs plaques de connexion (3) en continuité électrique avec lesdites pistes conductrices de l'électricité (2) et comportant chacune des moyens de connexion (32) et des moyens de fixation (34) destinés à recevoir un ou plusieurs capteurs (6),
dans laquelle la nappe de connexion (2) et les plaques de connexion (3) sont surmoulées dans la pièce de carrosserie (1) formant la peau extérieure (1),
**caractérisée en ce que** la continuité électrique entre la nappe de connexion (2) et la plaque de connexion (3) est assurée par des ergots (31) disposés sur la plaque de connexion (3) et poinçonnés sur les pistes conductrices de l'électricité (23) de la nappe de connexion (3),
et **en ce que** les moyens de connexion sont formés par une ou plusieurs broches de connexion (32) reliées électriquement aux ergots par des pistes conductrices de l'électricité (33) disposées sur la plaque de connexion (3) pour relier électriquement le capteur (6) à la nappe de connexion (2).

2. Pièce de carrosserie (1) selon la revendication 1, dans laquelle les moyens de fixation sont formés par un orifice (34) aménagé dans la plaque de connexion (3) pour supporter ledit capteur (6).

3. Pièce de carrosserie (1) selon l'une quelconque des revendications précédentes, comprenant une plaque de connexion principale (7) reliée électriquement par l'intermédiaire de la nappe de connexion (2) avec l'ensemble des plaques de connexion (3) de la pièce de carrosserie (1).

4. Pièce de carrosserie (1) selon l'une quelconque des revendications précédentes, dans laquelle la nappe de connexion (2) et les plaques de connexion (3) sont disposées du côté (12) de la paroi de la peau (1) non visible de l'extérieur de sorte que les pistes conductrices de l'électricité (23) de la nappe de connexion (2) sont intercalées entre la nappe de connexion (2) et la matière formant la peau (1).

5. Pièce de carrosserie (1) selon l'une quelconque des revendications précédentes, dans laquelle un orifice (13) est aménagé dans la paroi formant la peau extérieure (1) pour permettre l'accès du capteur (61, 6) au côté (11) de la paroi de la peau (1) visible de l'extérieur.

6. Pièce de carrosserie (1) selon l'une quelconque des revendications précédentes, comprenant un ou plusieurs capteurs (6) connectés sur une ou plusieurs plaques de connexion (3).

7. Pièce de carrosserie (1) selon la revendication 6, dans laquelle le capteur (6) est du type capteur de proximité, caméra de détection d'obstacle, caméra de détection du profil de la route, capteur/émetteur laser ou lidar, capteur de température, capteur de pression.

8. Procédé de fabrication par injection d'un matériau thermoplastique d'une pièce de carrosserie (1) formant une peau extérieure d'un véhicule automobile selon l'une quelconque des revendications précédentes, dans lequel on exécute les étapes suivantes :
- Etape A : on dépose une nappe de connexion souple (2) comportant sur une de ses faces des pistes conductrices de l'électricité (23) sur la surface d'une partie mobile (41) d'un moule (4), de sorte que la face de la nappe de connexion opposée à la face supportant les pistes conductrices de l'électricité (23) est en contact avec la surface du moule et que les pistes conductrices de l'électricité (23) sont placées au droit de matrices creuses (46) réalisées dans la partie mobile (41) du moule (4),
- Etape B : on superpose sur la nappe de connexion (2) une plaque de connexion (3) comportant un ou plusieurs ergots (31) dont la forme est adaptée pour pénétrer dans les matrices creuses (46), lesdits ergots (31) étant placés au droit desdites matrices creuses (46) et faisant face aux pistes conductrices de l'électricité (23),
- Etape C : on ferme le moule (4) en rapprochant la partie mobile (41) du moule (4) d'une partie fixe (42) du moule (4) et on injecte le matériau thermoplastique, de sorte que la pression régnant dans l'enceinte du moule a pour effet de faire pénétrer les ergots (31) de la plaque de connexion (3) dans les matrices creuses (46) et de poinçonner lesdits ergots (31) sur les pistes conductrices de l'électricité (23) de la nappe de connexion (2),
à l'issue de l'étape C, on démoule la pièce de carrosserie (1) et on insère des capteurs (6) ou des connecteurs dans les broches (32) des plaques de connexion (3).

9. Procédé selon la revendication 8, dans lequel, préalablement à l'étape B, on dépose une colle ou un vernis conducteur de l'électricité sur la surface des ergots (31).

10. Procédé selon l'une quelconque des revendications 8 ou 9, dans lequel on choisit les matériaux formant la nappe de connexion (2) et la plaque de connexion (3) parmi des matériaux compatibles avec le matériau thermoplastique formant la peau extérieure (1).

11. Procédé selon l'une quelconque des revendications 8 à 10, dans lequel la plaque de connexion (3) comprend des broches de connexion (32) s'étendant dans une direction sensiblement perpendiculaire à la surface de la plaque (3), et dans lequel, au cours de l'étape B, on introduit lesdites broches (32) dans une cale (44) formée d'un matériau élastique et insérée en force dans un orifice (48) pratiqué dans la partie mobile (41) du moule (4) de sorte que, lorsque la cale élastique (44) est complètement rentrée dans ledit orifice (48), les broches (32) sont comprimées radialement au sein de la cale (44).

## Patentansprüche

1. Karosserieteil (1) eines Kraftfahrzeugs, das eine Außenhaut bildet und durch Einspritzen eines thermoplastischen Materials hergestellt wird, aufweisend:
- eine Verbindungsmatte (2), die auf einer ihrer Seiten elektrische Leiterbahnen (23) trägt, und,
- eine oder mehrere Verbindungsplatte (3), die elektrisch mit den elektrischen Leiterbahnen (2) verbunden sind und jeweils Anschlussmittel (32) und Befestigungsmittel (34) zur Aufnahme eines oder mehrerer Sensoren (6) aufweisen, wobei die Verbindungsmatte (2) und die Verbindungsplatten (3) in das Karosserieteil (1) eingegossen sind, das die Außenhaut (1) bildet,
**dadurch gekennzeichnet, dass** die elektrische Kontinuität zwischen der Verbindungsmatte (2) und der Verbindungsplatte (3) durch Stifte (31) gewährleistet wird, die auf der Verbindungsplatte (3) angeordnet sind und auf den elektrischen Leiterbahnen (23) der Verbindungsmatte (3) eingestanzt sind, und dass die Verbindungsmittel durch einen oder mehrere Verbindungsstifte (32) gebildet werden, die durch auf der Verbindungsplatte (3) angeordnete elektrische Leiterbahnen (33) elektrisch mit den Stiften verbunden sind, um den Sensor (6) elektrisch mit der Verbindungsmatte (2) zu verbinden.

2. Karosserieteil (1) nach Anspruch 1, bei dem die Befestigungsmittel durch eine Öffnung (34) gebildet werden, die in der Verbindungsplatte (3) zum Tragen des Sensors (6) ausgebildet ist.

3. Karosserieteil (1) nach einem der vorhergehenden Ansprüche, mit einer Hauptverbindungsplatte (7), die über die Verbindungsmatte (2) mit allen Verbindungsplatten (3) des Karosserieteils (1) elektrisch verbunden ist.

4. Karosserieteil (1) nach einem der vorhergehenden Ansprüche, wobei die Verbindungsmatte (2) und die Verbindungsplatten (3) auf der von außen nicht sichtbaren Seite (12) der Wand der Haut (1) angeordnet sind, so dass die elektrischen Leiterbahnen (23) der Verbindungsmatte (2) zwischen der Verbindungsmatte (2) und dem die Haut (1) bildenden Material angeordnet sind.

5. Karosserieteil (1) nach einem der vorhergehenden Ansprüche, wobei in der die Außenhaut (1) bildenden Wand eine Öffnung (13) vorgesehen ist, die den Zugang des Sensors (61, 6) zu der von außen sichtbaren Seite (11) der Wand der Außenhaut (1) ermöglicht.

6. Karosserieteil (1) nach einem der vorhergehenden Ansprüche, aufweisend einen oder mehrere Sensoren (6), die mit einer oder mehreren Verbindungsplatten (3) verbunden sind.

7. Karosserieteil (1) nach Anspruch 6, wobei der Sensor (6) vom Typ Näherungssensor, Hinderniserkennungskamera, Straßenprofilerkennungskamera, Laser- oder Lidar-Sensor/-Sender, Temperatursensor, Drucksensor ist.

8. Verfahren zur Herstellung eines Karosserieteils (1), das eine Außenhaut eines Kraftfahrzeugs nach einem der vorhergehenden Ansprüche bildet, durch Spritzgießen eines thermoplastischen Materials, bei dem die folgenden Schritte ausgeführt werden:
- Schritt A: Legen einer flexible Verbindungsmatte (2), die auf einer ihrer Seiten elektrische Leiterbahnen (23) aufweist, auf die Oberfläche eines beweglichen Teils (41) einer Form (4), so dass die Seite der Verbindungsmatte, die der Seite gegenüberliegt, die die elektrischen Leiterbahnen (23) trägt, in Kontakt mit der Oberfläche der Form ist und dass die elektrischen Leiterbahnen (23) in Höhe von hohlen Matrizen (46) angeordnet sind, die in dem beweglichen Teil (41) der Form (4) hergestellt wurden,
- Schritt B: Legen einer Verbindungsplatte (3), die einen oder mehrere Stifte (31) aufweist, die so geformt sind, dass sie in die hohlen Matrizen (46) eindringen können, auf die Verbindungsmatte (2), wobei die Stifte (31) an den hohlen Matrizen (46) angeordnet sind und den elektrischen Leiterbahnen (23) zugewandt sind,
- Schritt C: Schließen der Form (4), indem der bewegliche Teil (41) der Form (4) an einen festen Teil (42) der Form (4) angenähert wird, und Einspritzen des thermoplastischen Materials, so dass der im Formraum herrschende Druck bewirkt, dass die Stifte (31) der Verbindungsplatte (3) in die hohlen Matrizen (46) eindringen und die Stifte (31) auf den elektrischen Leiterbahnen (23) der Verbindungsmatte (2) eingestanzt werden,
am Ende von Schritt C Entformen des Karosserieteils (1) und Einsetzen der Sensoren (6) oder Verbinder in die Stifte (32) der Verbindungsplatten (3).

9. Verfahren nach Anspruch 8, bei dem vor Schritt B ein elektrisch leitender Klebstoff oder Lack auf die Oberfläche der Stifte (31) aufgetragen wird.

10. Verfahren nach einem der Ansprüche 8 oder 9, bei dem die Materialien, die die Verbindungsmatte (2) und die Verbindungsplatte (3) bilden, aus Materialien ausgewählt werden, die mit dem thermoplastischen Material, das die Außenhaut (1) bildet, verträglich sind.

11. Verfahren nach einem der Ansprüche 8 bis 10, bei dem die Verbindungsplatte (3) Verbindungsstifte (32) aufweist, die sich in einer Richtung im Wesentlichen senkrecht zur Oberfläche der Platte (3) erstrecken, und bei dem in Schritt B, die Stifte (32) in einen Keil (44) eingeführt werden, der aus einem elastischen Material gebildet ist und mit Kraft in eine Öffnung (48) eingeführt wird, die in dem beweglichen Teil (41) der Form (4) ausgebildet ist, so dass, wenn der elastische Keil (44) vollständig in die Öffnung (48) eingezogen ist, die Stifte (32) innerhalb des Keils (44) radial zusammengedrückt werden.

## Claims

1. Body part (1) of a motor vehicle forming an outer skin and made by injection of a thermoplastic material comprising:
- a connection sheet (2) supporting on one of its faces electrically conductive tracks (23) and,
- one or more connection plates (3) in electrical continuity with said electrically conductive tracks (2) and each comprising means of connection (32) and means of attachment (34) intended to receive one or more sensors (6),
in which the connection sheet (2) and the connection plates (3) are overmolded in the body part (1) forming the outer skin (1),
**characterized in that** the electrical continuity between the connection sheet (2) and the connection plate (3) is ensured by lugs (31) arranged on the connection plate (3) and stamped on the electrically conductive tracks (23) of the connection sheet (3),
and **in that** the means of connection are formed by one or more connection pins (32) electrically connected to the lugs by electrically conductive tracks (33) arranged on the connection plate (3) to electrically connect the sensor (6) to the connection sheet (2).

2. Body part (1) according to claim 1, wherein the means of attachment are formed by an orifice (34) arranged in the connection plate (3) to support said sensor (6).

3. Body part (1) according to any one of the preceding claims, comprising a main connection plate (7) electrically connected via the connection sheet (2) with all the connection plates (3) of the body part (1).

4. Body part (1) according to any one of the preceding claims, wherein the connection sheet (2) and the connection plates (3) are arranged on the side (12) of the skin wall (1) which is not visible from the outside so that the electrically conductive tracks (23) of the connection sheet (2) are interspersed between the connection sheet (2) and the material forming the skin (1).

5. Body part (1) according to any one of the preceding claims, wherein an orifice (13) is arranged in the wall forming the outer skin (1) to allow access of the sensor (61, 6) to the side (11) of the skin wall (1) visible from the outside.

6. Body part (1) according to any one of the preceding claims, comprising one or more sensors (6) connected to one or more connection plates (3).

7. Body part (1) according to claim 6, wherein the sensor (6) is of the proximity sensor, obstacle detection camera, road profile detection camera, laser or lidar sensor/transmitter, temperature sensor, pressure sensor type.

8. Method of manufacturing by injection of a thermoplastic material a body part (1) forming an outer skin of a motor vehicle according to any one of the preceding claims, wherein the following steps are performed:
- Step A: applying a flexible connection sheet (2) having on one of its faces electrically conductive tracks (23) on the surface of a moving part (41) of a mold (4), so that the face of the connection sheet opposite to the face comprising the electrically conductive tracks (23) is in contact with the surface of the mold and that the electrically conductive tracks (23) are placed to the right of hollow matrices (46) made in the moving part (41) of the mold (4),
- Step B: overlaying on the connection sheet (2) a connection plate (3) comprising one or more lugs (31) whose shape is adapted to penetrate in the hollow matrices (46), said lugs (31) being placed at the right of said hollow matrices (46) and facing the electrically conductive tracks (23),
- Step C: closing the mold (4) by bringing the moving part (41) of the mold (4) closer to a fixed part (42) of the mold (4) and injecting the thermoplastic material, so that the pressure in the mold enclosure has the effect of making the lugs (31) of the connection plate (3) penetrate into the hollow matrices (46) and of stamping said lugs (31) on the electrically conductive tracks (23) of the connection sheet (2),
at the end of step C, unmolding the body part (1) and inserting sensors (6) or connectors into the pins (32) of the connection plates (3).

9. Method according to claim 8, wherein, prior to step B, an electricity conductive glue or varnish is deposited on the surface of the lugs (31).

10. Method according to any one of claims 8 or 9, wherein the materials forming the connection sheet (2) and the connection plate (3) are chosen from materials compatible with the thermoplastic material forming the outer skin (1).

11. Method according to any one of claims 8 to 10, wherein the connection plate (3) comprises connection pins (32) extending in a direction substantially perpendicular to the surface of the plate (3), and wherein, during step B, said pins (32) are introduced into a wedge (44) formed of an elastic material and inserted in force into an orifice (48) formed in the moving part (41) of the mold (4) so that, when the elastic wedge (44) is completely inside said orifice (48), the pins (32) are compressed radially within the wedge (44).
